# EUROPEAN PATENT SPECIFICATION

(11) **EP 1 419 694 B1**
(45) Date of publication and mention of the grant of the patent: **25.06.2008**
(21) Application number: 02755751.1
(22) Date of filing: 01.08.2002
(51) Int. Cl.: A21D 2/34, A23G 3/00, A23C 9/14, A21D 2/26, A23C 9/142, A23C 9/152

(54) **MILK POWDERS FOR CONFECTIONERY AND BAKERY PRODUCTS**
MILCHPULVER FÜR SÜSSWAREN UND BACKWAREN
POUDRES DE LAIT POUR CONFISERIE ET PATISSERIE

(30) Priority: 03.08.2001 JP 2001236146
(43) Date of publication of application: 19.05.2004
(73) Proprietor: Snow Brand Milk Products Co., Ltd., Sapporo-shi Hokkaido 065-0043 (JP)
(72) Inventor: SERIZAWA, Atsushi, Kawagoe-shi, Saitama 350-1165 (JP); GOTO, Takeshi, Higashikurume-shi, Tokyo 203-0044 (JP); CHINO, Mikako, Niiza-shi, Saitama 352-0034 (JP); MORITA, Minoru, Kawagoe-shi, Saitama 350-0044 (JP); YAMAMOTO, Harunobu, Kawagoe-shi, Saitama 350-1124 (JP)
(74) Representative: Vossius & Partner
(86) International application number: PCT/JP2002/007855
(87) International publication number: WO 2003/013258

(56) References cited:
- EP-A- 0 443 763
- EP-A- 0 520 581
- EP-A- 1 123 656
- EP-A1- 1 031 288
- EP-A1- 1 041 065
- EP-A2- 1 046 344
- JP-A- 5 007 468
- JP-A- 2000 102 344
- US-A- 5 494 696
- BLONDEAU T ET AL: "Effects of the composition of various European dried milks on the properties of yoghurt." INDUSTRIES ALIMENTAIRES ET AGRICOLES 1992 ENSIA, SERVICE D'IND. LAITIERE, BP 39, 369 RUE JULES GUESDE, 59651 VILLENEUVE D'ASCQ, FRANCE, vol. 109, no. 1/2, 1992, pages 28-30, XP008038711

## Description

The present invention describes milk powders which are useful for preparing confectionary and bakery products. By adding the milk powders for confectionary and bakery products given in the present invention to breads, pancakes, cakes, pies, etc., during the production process, the resulting goods will have increased volume. In particular, breads, pancakes and cakes will have a finer texture and a softer feel in the mouth.

EP-A-443 763 describes formulate milk for infants analogous to human milk which comprises non-protein nitrogen components obtained by treating whey. US-A-5,494,696 describes a partially denatured whey protein product with a protein content of 65 to 95 % by weight relative to the dry matter, a protein denaturization level of 55 to 80 % and a mean particle size in the range from 30 to 60 µm. The product is stated to be suitable for cold-prepared emulsions. EP-A-1.123 656 (which is prior art according to Art. 54(3) EPC) describes bread products containing non-protein nitrogen in an amount corresponding to 35 to 80 mg nitrogen per 100 g of bread without topping, filling and glazing.

T. Blondeau et al. describe the influence of the composition of several European milk powders on the characteristics of yogurt (Actualités des industries alimentaires et agro-industrielles, 1992 Ensia, Service d'ind. laitiere, BP 39, 369 Rue Juels Guesde, 59651 Villeneuve d'Ascq, FR, Vol. 109, No. 1/2, 1992, pages 28-30).

The important elements of breadmaking include the generation of a gas that raises the dough (fermentation), the formation of a surface layer that encases and preserves the gas (dough mixing) and the creation of flavors (fermentation and baking). In particular, to produce breads having high volume, fine texture and a good feel in the mouth, it is considered important to maintain the correct balance of extendability and tensile strength in the dough before baking. Moreover, the dough's balance of extendability and tensile strength is a critical property not only in the production of bakery products but also in the production of confectionary products, including pancakes, cakes and pies.

Skim milk powders are added to the bread dough to improve yield through the improvement of moisture absorption, to stabilize the fermentation process through buffering action, and to add milk flavor. Mixing in skim milk powders adds a milk flavor and thereby produces flavorful breads, but the desired fineness of texture and softness are often unachievable in breads baked in industrial facilities. For this reason dough is often mixed with potassium bromate and L-ascorbic acid, which are oxidizers that serve to improve the dough's tensile strength; sucrose fatty acid ester, fatty acid monoglyceride, organic monoglyceride, stearoyl calcium lactate and other emulsifiers that serve to improve the dough's extendability; protease, amirase and other enzymes; yeast food and other flour improvers comprising mixtures of the aforementioned additives; and other additives that improve the bread quality or baking process. This helps adjust the balance of extendability and tensile strength of the bread dough and allows for the production of breads having good volume, texture and feel in the mouth. However, the use of these additives can affect the unique flavor of the bread due to the flavors of the emulsifiers, and the excessive action of enzymes may lower the efficiency of dough preparation. Additionally, consumers have become averse to food additives in recent years. These factors have brought about the need for breads containing minimal food additives.

As a result of earnest efforts to produce breads offering good volume, texture and feel in the mouth without using food additives, the inventors have found that breads offering good volume, texture and feel in the mouth can be achieved through the addition (during the bread-making process) of milk powders containing specific amounts of non-protein nitrogen and ash, and in which the ratio of said non-protein nitrogen and total nitrogen is adjusted to a point below a specified level. Moreover, the inventors have found that the addition of the aforementioned milk powders during the production of pancakes, cakes, pies, etc., will yield the same effect, and have completed the present invention based on their findings. In view of the above, the aim of the present invention is to provide milk powders for confectionary and bakery products.

In the present invention milk powders are described which comprise 4 to 10 weight-percent of non-protein nitrogen based on the weight of converted protein and 1 to 20 weight-percent of ash per 100 grams of the final confectionary/bakery product, and which also have a ratio of non-protein nitrogen to total nitrogen of 0.5 or less, by combining dairy ingredients containing non-protein nitrogen obtained by filtering raw milk, milk powders or whey through microfiltration (MF) membrane, ultrafiltration (UF) membrane, nanofiltration (NF) membrane, reverse osmosis (RO) membrane, etc.; or dairy ingredients containing non-protein nitrogen that are obtained by removing salt and lactose from milk, milk powders or whey, with other dairy ingredients such as whole milk powders, skim milk powders, buttermilk powders, whey powders, milk mineral powders, whey protein concentrates and milk protein concentrates, as appropriate. By adding the resulting milk powders during the production of confectionary and bakery products, the non-protein nitrogen, ash and other ingredients contained in the lactose powders will act upon the dough and adjust the balance of its extendability and tensile strength, thereby increasing the volume of the final bread, pancake, cake, pie, etc., and especially giving a finer texture and softer feel in the mouth in the case of a bread, pancake or cake.

In the production of milk powders for confectionary and bakery products described in the present invention, first a dairy ingredient containing non-protein nitrogen is prepared. This dairy ingredient can be obtained via the method described in Japanese Patent Application Laid-open No. 2000-102344. For example, raw milk, milk powders or whey can be divided through ultrafiltration (UF), gel filtration, etc., into a part containing protein of relatively large molecular weight (retentate) and a part containing protein of relatively small molecular weight whose main constituents are lactose and salt (permeate). By removing lactose from the permeate through fractional precipitation via the recrystallization of lactose, gel filtration, nanofiltration (NF) or other processes, a dairy ingredient containing salt and non-protein nitrogen can be obtained. This dairy ingredient can be used either as a solution or a dry powder. The composition obtained through the method described in Japanese Patent Application Laid-open No. 2000-281638 can also be used as a dairy ingredient for the same purpose. This dairy ingredient is obtained by removing salt and lactose from whey, for example, and is used either as a solution or a dry powder. The milk powders for confectionary and bakery products described in the present invention can be obtained by mixing these dairy ingredients with whole milk powders, skim milk powders, buttermilk powders, whey powders, milk minerals, whey protein concentrates, milk protein concentrates and other milk ingredients as appropriate, so that the final milk powder for confectionary/bakery product will contain 4 to 10 weight-percent of non-protein nitrogen based on the weight of converted protein and 1 to 20 weight-percent of ash, in a manner controlling the ratio of non-protein nitrogen to total nitrogen at 0.5 or less. Furthermore, the milk powders for confectionary and bakery products described in the present invention may also be obtained by mixing milk minerals with dairy ingredients such as whole milk powders, skim milk powders, buttermilk powders, whey powders, whey protein concentrates and milk protein concentrates, as appropriate, and then adjusting the constituents to the aforementioned composition ranges.

If the content of non-protein nitrogen in the milk powders for confectionary and bakery products described in the present invention is less than 4 weight-percent, or the ash content is less than 1 weight-percent, an optimal balance may not be obtained between the dough's extendability and tensile strength and the resulting bread, pancake, cake, pie, etc., may not have sufficient volume. Contrastingly, a non-protein nitrogen content exceeding 10 weight-percent or ash content exceeding 20 weight-percent will weaken the dough's extendability and tensile strength, which will not only result in a bread, pancake, cake, pie, etc., having an insufficient volume but the bread, pancake or cake may also fail to offer a fine texture and soft feel in the mouth. Additionally, a ratio of non-protein nitrogen to total nitrogen exceeding 0.5 will tip the balance of the dough's extendability and tensile strength, again leading to insufficient volume in the bread, pancake, cake, pie, etc. In short, the milk powders for confectionary and bakery products described in the present invention will have the aforementioned effects in the resulting coiifectionary/bakery products if added by 0.5 weight-percent or more, or preferably between 0.5 and 10 weight-percent, of the flour.

The milk powders for confectionary and bakery products described in the present invention provides the desired effects when it is added during the production of breads, pancakes; cakes and pies

In the context of the present invention, the term "breads" indicates those that are made by forming a kneaded dough from starch, water and/or other ingredients and baking the dough, and include regular breads (white breads, variety breads, dinner rolls, etc.), hard-baked breads (hard breads, hard rolls, pizzas, etc.) and pastries (breads with red-bean paste filling, fried breads, steamed breads, etc.). Pancakes include pancakes, crepes, palatschinkens, waffles, doughnuts, imagawayakis, dorayakis, taiyakis, okonomiyakis and takoyakis. Cakes are those made of whole eggs or egg white and containing air, including spongecakes, buttercakes, chiffons, souffles, marshmallows, mousses, bouchees, meringues, cookies, kasuteras, macaroons and bolos. Pies include those with ingredients mixed into the dough or inserted between layers of dough, as well as Danishes, croissants and brioches. It is also possible to provide premixed powders for confectionary and bakery products by intermixing the milk powders for confectionary and bakery products described in the present invention in the amount of 0.5 to 10 weight-percent of the flour.

Reference 1Skim milk powders were concentrated to a factor of 2.5 times using nanofiltration (NF) membrane (Desal-5, by Desalination) having a salt inhibition ratio of 50%. Membrane filtration was performed at an operating temperature of 50°C and under pressure of 1.3 MPa. The permeate thus produced (nanofiltration permeate, hereinafter referred to as NFP) was collected and freeze-dried to produce dairy NFP powder. The composition of this NFP powder was 3.0 weight-percent water, 0.2 weight-percent fat, 25.3 weight-percent protein, 3.1 weight-percent sugar and 68.4 weight-percent ash, and it contained 24.9 weight-percent of non-protein nitrogen (based on the weight of converted protein).

Example 1Fifteen grams of the NFP powder prepared in reference 1 was dissolved in 1 kg of milk powders and freeze-dried to prepare Invention Variation 1.

Example 2 Ten grams of the NFP powders prepared in reference 1 was dissolved in 1 kg of cheese whey, desalinated via electrodialysis using the normal method and then freeze-dried to prepare Invention Variation 2.

Reference 2 Cheese whey was concentrated using the normal method to a total solid content of 50%, and the whey concentrate thus obtained was gradually cooled to 7°C to precipitate lactose, whereupon a part of the lactose was removed through centrifugal separation. This operation was repeated to obtain lactose-free whey, which was then freeze-dried to prepare lactose-free whey powder. The composition of this lactose-free whey powder was 3.5 weight-percent water, 4.5 weight-percent fat, 26.5 weight-percent protein, 48.4 weight-percent sugar and 17.1 weight-percent ash, and it contained 17.3 weight-percent of non-protein nitrogen (based on the weight of converted protein).

Example 3 The lactose-free whey powder prepared in reference 2 was mixed with skim milk powders and whey powders at weight ratios of 2:1:2 to prepare Invention Variation 3.

Reference 3 Salt-free whey was obtained from cheese whey through electrodialysis using the normal method, and a part of the obtained salt-free whey was concentrated to a total solid content of 50% according to the normal method. A portion of the salt-free whey concentrate was freeze-dried to prepare salt-free whey powders. Additionally, a part of the salt-free whey concentrate was gradually cooled to precipitate lactose, whereupon a part of the lactose was removed through centrifugal separation. This operation was repeated to obtain salt-free, lactose-free whey concentrate, which was then freeze-dried to produce salt-free, lactose-free whey powders. The composition of the prepared salt-free whey powders was 3.5 weight-percent water, 4.0 weight-percent fat, 12.5 weight-percent protein, 78.8 weight-percent sugar and 1.2 weight-percent ash, and it contained 3.2 weight-percent of non-protein nitrogen (based on the weight of converted protein). The salt-free, lactose-free whey powders were 3.1 weight-percent water, 5.2 weight-percent fat, 31.0 weight-percent protein, 58.6 weight-percent sugar and 2.1 weight-percent ash, and it contained 20.1 weight-percent of non-protein nitrogen (based on the weight of converted protein).

Example 4 The salt-free, lactose-free whey powders prepared in reference 3 was mixed with salt-free whey powders and buttermilk powders at weight ratios of 1:4.5:4.5 to prepare Invention Variation 4.

Table 1 lists the compositions (in weight-percent), non-protein nitrogen contents (in weight-percent) and ratios of non-protein nitrogen to total nitrogen of invention variations 1 to 4 obtained in examples 1 to 4. Non-protein nitrogen is indicated by the weight of converted protein.

**Table 1**

| Composition | Invention variation 1 | Invention variation 2 | Invention variation 3 | Invention variation 4 |
|---|---|---|---|---|
| Water | 3.6% | 3.1 % | 3.2% | 3.5% |
| Fat | 0.7% | 4.4% | 3.7% | 5.5% |
| Protein | 33.3% | 17.1% | 22.6% | 23.7% |
| Sugar | 45.3% | 74.3% | 58.8% | 63.0% |
| Ash | 17.1% | 1.1% | 11.7% | 4.3% |
| Non-protein nitrogen | 6.2% | 7.9% | 9.1% | 4.2% |
| Ratio of non-protein nitrogen to total nitrogen | 0.19 | 0.46 | 0.40 | 0.18 |

Example 5 (Making breads) A bread dough was prepared by introducing 0.86 kg of water and 1.4 kg of extra-strength flour (Camelia, by Nisshin Seifun) into a mixer (CS-20, by Kanto Kongoki), mixing the ingredients for one minute at low speed (150 rpm), and then adding 0.026 kg of dry yeast (Saf-Instant, by Nichifutsu) and 0.002 kg of yeast food (by Oriental Yeast) and mixing the ingredients for two minutes at medium speed (260 rpm). For preparation of the final bread dough, the above preliminary dough was subjected to primary fermentation in a fermenter (62-EXC, by Kyodo Dennetsu) at 27°C and 80%RH for two hours and 30 minutes, during which time the dough was degassed after one hour and 20 minutes. Next, 0.6 kg of extra-strength flour, 0.04 kg each of invention variations 1, 2, 3, 4 or skim milk powders, 0.04 kg of salt, 0.08 kg of sugar and 0.416 kg of water were introduced to a mixer and mixed for two minutes at low speed (150 rpm) and then for four minutes at medium low speed (200 rpm). Subsequently, 0.08 kg of shortening (Bread Mate #100, by Snow Brand Milk) was added and mixed for two minutes at low speed (150 rpm) and for another four minutes at medium speed (260 rpm) to prepare the dough (kneading temperature 27°C). This dough was fermented for one hour in a fermenter at 27°C and 80%RH, after which the dough was divided into 450-gram balls, rolled and left standing for 15 minutes at room temperature (25 to 26°C). Each roll was then formed in a molder and placed in a box-style bread mold (1500-ml capacity), allowed to rise for one hour in a fermenter at 38°C and 80%RH, and then baked for 23 minutes in a 210°C oven to obtain five types of breads.

Text Example 1 The breads mixed with invention variations 1 to 4 were given as breads A to D, while the bread mixed with skim milk powders was given as comparison sample 1. For these breads the specific volume and hardness were measured and the texture and feel in the mouth were evaluated by sensory judgment. A preservation test was also conducted.
(1) Measurement of specific volume: The volume was obtained via the rapeseed replacement method (E. J. Pyler, Baking Science & Technology, Vol. II, p.892, 1973). The weight of the bread was also measured and the volume per weight was calculated as specific volume (ml/g).
(2) Measurement of hardness: The breads were placed in polyethylene bags, which were sealed and kept overnight in a 20°C thermostatic chamber. Each obtained sample was sliced to a 18-mm thickness and compressed to 3 mm with a plunger (having a bottom area of 6.4 cm²) using a baker's compressimeter (by Tiyoda Manufacturing). The corresponding stress (gf/cm²) was obtained as hardness.
(3) Sensory evaluations: Eighteen experienced panelists ate the breads sliced to 18-mm thickness and evaluated their texture (fineness) and feel in the mouth (softness) based on the following criteria. Texture = Texture is very fine and excellent (5 points), Texture is fine and good (4 points), Texture is average (3 points), Texture is rough and undesirable (2 points), Texture is very rough and bad (1 point). Feel in the mouth = It feels very soft in the mouth and excellent (5 points), It feels soft in the mouth and good (4 points), It feels average (3 points), It feels hard and undesirable (2 points), It feels very hard and bad (1 point). With each sample the average score was rounded to the second decimal place.
(4) Preservation test: Each sample was placed in a polyethylene bag, which was sealed and kept in a 20°C thermostatic chamber for three days, whereupon the hardness was measured. The measurement of hardness conformed to the method specified in (2).

Table 2 summarizes the respective results.

**Table 2**

| | Bread A | Bread B | Bread C | Bread D | Comparison sample 1 |
|---|---|---|---|---|---|
| Specific volume (ml/g) | 5.93 | 5.89 | 5.67 | 5.88 | 5.30 |
| Hardness (gf/cm²) | 18.1 | 19.2 | 18.5 | 18.3 | 21.0 |
| Sensory valuation Texture | 4.5 | 4.5 | 4.5 | 4.2 | 3.5 |
| Feel in themouth | 4.7 | 4.7 | 4.8 | 4.7 | 3.1 |
| Preservation test (gf/cm²) | 25.5 | 24.9 | 25.1 | 25.8 | 37.1 |

Compared with comparison sample 1, breads A to D all had a greater specific volume and were thus more voluminous, and they also had lower degrees of hardness. According to the sensory evaluation results, breads A to D had a fine texture and were soft. They didn't harden easily after three days.

Example 6 (Making pancakes) A dough was prepared by mixing 1.2 g of salad oil, 7.3 g of sugar, 17.3 g of beaten egg, 0.1 g of salt and 3.6 g each of Invention Variation 1, 2, 3 or 4 or skim milk powders, adding 30 g of water and mixing well, and then adding 38.7 g of sifted wheat flour (by Nisshin Seifun) and 1.9 g or baking powder and mixing lightly. A 10-cm diameter ring was placed on a hot plate heated to 180 °C, into which 50 g of dough was poured. Each side was baked for one minute and 30 seconds to obtain five types of pancakes.

Test Example 2The pancakes mixed with invention variations 1 to 4 were given as pancakes A to D, while the pancake mixed with skim milk powders was given as comparison sample 2, and the hardness of each pancake was measured. Pancakes A to D and comparison sample 2 were also quick-frozen at -20°C, kept at -20°C for two weeks and then heated for one minute per pancake in a 500-watt microwave oven. The heated pancakes were kept at room temperature for 10 minutes and then measured for hardness. Sensory evaluations were also conducted.
(1) Measurement of hardness: Hardness was measured with a Rheoner (RE-3305, by Yamaden) at 2.5 cm from the center of each pancake having a diameter of 10 cm, using a cylindrical plunger with a diameter of 5 mm and a penetration speed of 10 mm/sec. The load at a penetration depth of 5 mm (gf) was measured and used as an indication of pancake hardness. A pancake usually has a soft feel in the mouth when this load is small, preferably between 60 and 120 gf.
(2) Sensory evaluations: Eighteen experienced panelists ate the pancakes and evaluated their appearance, feel in the mouth (softness) and flavor based on the following criteria: excellent (5 points), good (4 points), average (3 points), poor (2 points), bad (1 point). For all samples the average score was rounded to the second decimal place.

Table 3 summarizes the respective results.

**Table 3**

| | Pancake A | Pancake B | Pancake C | Pancake D | Comparison sample 2 |
|---|---|---|---|---|---|
| Hardness (gf) | 92.5 | 98.0 | 89.1 | 100.2 | 125.4 |
| After preservation in the frozen state (gf) | 92.7 | 98.3 | 90.1 | 101.1 | 155.2 |
| Sensory evaluations Appearance | 4.1 | 4.5 | 4.1 | 4.2 | 3.2 |
| Feel in the mouth | 4.3 | 4.8 | 3.9 | 4.4 | 3.1 |
| Flavor | 4.4 | 4.2 | 4.0 | 4.8 | 2.9 |

Compared with comparison sample 2, pancakes A to D all had a smaller load immediately after baking. Additionally, pancakes A to D didn't harden easily, even 10 minutes after being heated in a microwave oven following their preservation in the frozen state. Furthermore, the panelists evaluated these pancakes as fluffy, having a good appearance, softness in the mouth and being flavorful.

Example 7 (Making spongecakes) One hundred and ten grams of sugar (highly refined sugar by Dai-Nippon Meiji Sugar) and 2 g each of Invention Variation 1, 2, 3 or 4 or skim milk powders were mixed, after which each of the mixtures was sifted. An egg solution was prepared by beating 130 g of eggs uniformly without foaming and then transferring the eggs and sugar mixed with Invention Variation 1, 2, 3 or 4 or skim milk powders to a mixer (N-50, by Hobart) and mixing for 30 seconds at low speed (60 rpm) and then for four minutes and 30 seconds at medium speed (120 rpm) until the eggs foamed. One hundred grams of sifted wheat flour (by Nisshin Seifun) was added to this egg solution and mixed lightly with a scraper to prepare a dough. Then, 320 g of this dough was poured into a cake mold (having an inner diameter of 150 mm) placed on a silicone sheet, and was baked for 25 minutes in a 180°C oven, after which the baked dough was gradually cooled for one hour at room temperature to obtain five types of spongecakes. While the spongecakes were being prepared, the specific gravity of each foamed egg solution was measured. The results are shown in Table 4. As for the egg solutions, those mixed with invention variations 1 to 4 were given egg solutions A to D, while the one mixed with skim milk powders was given as comparison sample 3.

**Table 4**

| | Egg solution A | Egg solution B | Egg solution C | Egg solution D | Comparison sample 3 |
|---|---|---|---|---|---|
| Specific gravity | 0.42 | 0.40 | 0.40 | 0.41 | 0.47 |

Compared with comparison sample 3, egg solutions A to D all had a lower specific gravity and contained more air.

Generally, when preparing a spongecake the specific gravity of the egg solution is measured as a reference of air contained in the egg solution. It is believed that a spongecake having good properties in both its inner and outer sections can be obtained when this specific gravity is within the range of 0.4 and 0.6.

However, even when the specific gravity of the egg solution is approximately 0.4 to 0.6 and the spongecake contains a large amount of air, if many of the air bubbles are large the cake will crumble easily in the mouth, which is undesirable. A spongecake containing fine, evenly distributed cavities can be obtained when small air bubbles are uniformly distributed throughout the cake.

Test Example 3The spongecakes baked from egg solutions A to D were given as spongecakes A to D, while the spongecake baked from comparison sample 3 was given as comparison sample 4. For these spongecakes the specific volume was measured to evaluate their volume, and sensory evaluations were conducted on the inner and outer sections.
(1) Specific volume: The volume of spongecake (ml) was measured by the rapeseed replacement method and its ratio to the weight of spongecake (g) was calculated as specific volume (ml/g). Generally, the larger the specific volume, the more voluminous the cake becomes.
(2) Sensory evaluations: Fifteen experienced panelists evaluated the four items of volume, color, shape uniformity and surface condition for the outer section. For the inner section they evaluated a different set of four items consisting of cavity condition, color, feel in the mouth and flavor. The items were scored using the demerit-mark method with a full score of five points for both the outer and inner sections. The sum of these scores was recorded for each sample.

Table 5 summarizes the respective results.

**Table 5**

| | Spongecake A | Spongecake B | Spongecake C | Spongecake D | Comparison sample 4 |
|---|---|---|---|---|---|
| Specific volume | | | | | |
| (ml/g) | 3.33 | 3.48 | 3.80 | 3.58 | 3.01 |
| Sensory evaluations | | | | | |
| Outer section | 19 | 20 | 20 | 20 | 17 |
| Inner section | 20 | 20 | 19 | 19 | 18 |

Compared with comparison sample 4, spongecakes A to D all had greater specific volume and thus were more voluminous. The sensory evaluation results also suggested that spongecakes A to D had greater volume, better color, better uniformity and shape, a moister surface and better outer section than comparison sample 4. They also had fine, evenly distributed cavities, and the flavor and feel in the mouth were excellent.

Example 8 (Making pies) In a mixer (CS-20, by Kanto Kongoki) 225 g of water, 50 g of salt and 25 g each of invention variation 1, 2, 3 or 4 or skim milk powders were introduced and dissolved. Then, 450 g of extra-strength flour (Camelia, by Nisshin Seifun), 50 g of wheat flour (by Nisshin Seifun), 0.5 g of malt powder, 30 g of dry yeast, 15 g of margarine (JELLYKA 500, by Snow Brand Milk) and 60 g of whole egg were introduced and kneaded for two minutes at low speed (150 rpm) and then for three minutes at medium-low speed (200 rpm) by adjusting the temperature so that the temperature of the final dough would reach 25°C. Thereafter, the dough was rolled to a 1-cm thickness and placed in a plastic bag to prevent drying, and was then kept for 20 minutes in room temperature (25°C) and for another 40 minutes in a refrigerator (5°C) to obtain the final dough.

The refrigerated dough was rolled to a 4-mm thickness using a reverse sheeter (by Masaki Kikai). Next, 100 g of roll-in oil (unsalted butter by Snow Brand Milk) was spread over two-thirds of the dough's surface area, and the dough was then folded into three layers. This process was repeated three times by keeping the dough in a refrigerator (5°C) for 20 minutes after each folding session. The dough was kept in a refrigerator (5°C) for 40 minutes after the third and final folding session to prepare a Danish dough.

Next, the dough was rolled to a 3-mm thickness, cut to 8 x 8 x 8 cm in size and kept in a 30°C fermenter for 40 minutes. The sized dough was then baked for 12 minutes in a 210°C oven and let cool for 24 hours at room temperature (25°C) to obtain five types of Danish pies.

Test Example 4 The Danish pies mixed with invention variations 1 to 4 were given as Danish pies A to D, while the Danish pie mixed with skim milk powders was given as comparison sample 5. For each sample the thickness and flakiness were measured, sensory evaluations were conducted, and a visual inspection was performed regarding the layer condition of the Danish pie.
(1) Measurement of thickness: The height of each sample was measured using calipers. The heights of 10 Danish pies were measured for each sample, and the average was rounded to the second decimal place.
(2) Measurement of flakiness: Using a Rheoner (RE-33005, by Yamaden), a plunger (3-mm diameter cylinder) was driven into the center of each sample from above at 1 mm/sec and the load (gf) at a penetration depth of 2 mm was measured as flakiness. The loads of 10 Danish pies were measured for each sample, and the average was rounded to the second decimal place. Generally, the smaller this load, the flakier the texture becomes.
(3) Sensory evaluations: Eighteen experienced panelists ate the Danish pies and evaluated their feel in the mouth (crispiness) and flavor based on the following criteria. The average score was rounded to the second decimal place. Feel in the mouth = Very crispy and flaky and excellent (5 points), Crispy and flaky and good (4 points), Average (3 points), Hard and not flaky and undesirable (2 points), Very hard and no flakiness and bad (1 point). Flavor = Very flavorful and excellent (5 points), Flavorful and good (4 points), Average (3 points), Not so flavorful and undesirable (2 points), Not flavorful at all and bad (1 point).
(4) Layer condition of Danish pies: Eighteen experienced panelists evaluated the layer condition of each sample based on the following criteria. The average was rounded to the second decimal place. Uniform layers and excellent (5 points), Roughly uniform layers and good (4 points), Average (3 points), Partially non-uniform layers and undesirable (2 points), Non-uniform layers and bad (1 point).

Table 6 summarizes the respective results.

**Table 6**

| | Danish pie A | Danish pie B | Danish pie C | Danish pie D | Comparison - sample 5 |
|---|---|---|---|---|---|
| Thickness (mm) | 28.2 | 29.5 | 27.9 | 30.1 | 18.7 |
| Flakiness (gf) | 45.8 | 44.2 | 46.9 | 51.0 | 102.4 |
| Sensory evaluations | | | | | |
| Feel in the mouth | 4.8 | 4.5 | 4.1 | 4.2 | 2.9 |
| Flavor | 4.3 | 4.9 | 4.0 | 4.3 | 3.1 |
| Layer condition | 4.2 | 4.4 | 4.1 | 4.7 | 1.9 |

Compared with comparison sample 5, Danish pies A to D were all more voluminous and flaky. Moreover, they also had better flavor and a crispy feel in the mouth. The layers of these four Danish pies were uniform, as well.

Example 9 Five types of breads were prepared using the same method as in example 5 by mixing 0.005, 0.01, 0.02, 0.04 and 0.06 kg of Invention Variation 1, respectively, to obtain breads E to I. For breads E to I the specific volume and hardness were measured, sensory evaluations were conducted on texture and feel in the mouth, and preservation tests were carried out in the same manner as in test example 1. Table 7 summarizes the respective results.

**Table 7**

| | Bread E | Bread F | Bread G | Bread H | Bread I |
|---|---|---|---|---|---|
| Specific volume. (ml/g) | 5.29 | 5.48 | 5.85 | 5.93 | 5.97 |
| Hardness (gf/cm²) | 21.1 | 20.1 | 19.3 | 18.1 | 18.2 |
| Sensory evaluations Texture | 2.9 | 4.0 | 4.2 | 4.5 | 4.4 |
| Feel in the mouth | 2.8 | 4.1 | 4.5 | 4.7 | 4.3 |
| Preservation test (gf/cm²) | 37.6 | 32.5 | 27.9 | 25.5 | 25.1 |

Bread E had a relatively small specific volume and a high hardness value, with the sensory evaluation result also suggesting hardness. Bread E hardened after having been kept for three days. Contrastingly, breads F to I had a relatively high specific volume and a low hardness value, with the sensory evaluation results also suggesting softness. Breads F to I didn't harden easily after having been kept for three days. These results confirmed that adding 0.5 weight-percent or more of the milk powder would produce favorable effects.

The present invention describes milk powders for confectionary and bakery products. The milk powders used for confectionary and bakery products described in the present invention will increase the volume of breads, pancakes, cakes, pies, etc., when added during the production process. In particular, it can add a finer texture and softer feel in the mouth to breads, pancakes and cakes.

## Claims

1. Premixed powder for confectionary and bakery products comprising a mixture of flour and 0.5 to 10 weight-percent of milk powder for confectionary and bakery products relative to said flour, wherein said milk powder for confectionary and bakery products comprises 4 to 10 weight-percent of non-protein nitrogen (based on the weight of converted protein) and 1 to 20 weight-percent of ash in a manner keeping the ratio of non-protein nitrogen to total nitrogen to 0.5 or less.

2. Use of a milk powder comprising 4 to 10 weight-percent of non-protein nitrogen (based on the weight of converted protein) and 1 to 20 weight-percent of ash in a manner keeping the ratio of non-protein nitrogen to total nitrogen to 0.5 or less in the production of confectionary and bakery products.

## Patentansprüche

1. Vorgemischtes Pulver für Süßwaren und Backwaren, umfassend ein Gemisch aus Mehl und 0,5 bis 10 Gew.-% Milchpulver für Süßwaren und Backwaren, bezogen auf das Mehl, wobei das Milchpulver für Süßwaren und Backwaren 4 bis 10 Gew.-% Nicht-Protein-Stickstoff (basierend auf dem Gewicht des umgewandelten Proteins) und 1 bis 20 Gew.-% Asche in einer Weise umfasst, dass das Verhältnis von Nicht-Protein-Stickstoff zu Gesamtstickstoff bei 0,5 oder weniger gehalten wird.

2. Verwendung eines Milchpulvers, umfassend 4 bis 10 Gew.-% Nicht-Protein-Stickstoff (basierend auf dem Gewicht des umgewandelten Proteins) und 1 bis 20 Gew.-% Asche in einer Weise, dass das Verhältnis von Nicht-Protein-Stickstoff zum Gesamtstickstoff bei 0,5 oder weniger gehalten wird, bei der Herstellung von Süßwaren und Backwaren.

## Revendications

1. Poudre prémélangée pour des produits de confiserie et de pâtisserie comprenant un mélange de farine et 0,5 à 10 pour cent en poids de lait en poudre pour des produits de confiserie et de pâtisserie par rapport à ladite farine, dans laquelle ledit lait en poudre pour des produits de confiserie et de pâtisserie comprend 4 à 10 pour cent en poids d'azote non protéique (en se basant sur le poids de protéine convertie) et 1 à 20 pour cent en poids de cendres d'une manière maintenant le rapport d'azote non protéique sur l'azote total à 0,5 ou moins.

2. Utilisation d'un lait en poudre comprenant 4 à 10 pour cent en poids d'azote non protéique (en se basant sur le poids de protéine convertie) et 1 à 20 pour cent en poids de cendres d'une manière à maintenir le rapport d'azote non protéique sur l'azote total à 0,5 ou moins dans la production de produits de confiserie et de pâtisserie.
